# EUROPEAN PATENT APPLICATION

(11) **EP 4 468 651 A1**
(43) Date of publication of application: **27.11.2024**
(21) Application number: 23766478.4
(22) Date of filing: 16.02.2023
(51) Int. Cl.: H04L 9/32, E02F 9/26

(54) **AUTHENTICATION SYSTEM, AUTHENTICATION METHOD, AND AUTHENTICATION PROGRAM**

(30) Priority: 10.03.2022 JP 2022037215
(71) Applicant: KOBELCO CONSTRUCTION MACHINERY CO., LTD., Hiroshima-shi, Hiroshima 731-5161 (JP)
(72) Inventor: HAMAMOTO, Ryo, Hiroshima-shi, Hiroshima 731-5161 (JP); ENDO, Kazuomi, Hiroshima-shi, Hiroshima 731-5161 (JP)
(74) Representative: TBK
(86) International application number: PCT/JP2023/005519
(87) International publication number: WO 2023/171298

(57) **Abstract**

A first mover (10) includes a request information transmission section (37a). The request information transmission section (37a) transmits request information (A) to a second mover (60) through wireless communication. The request information (A) indicates a request for a signature (B2a) to be affixed on specific information (A2a). The second mover (60) includes a signing part (84) and a response information transmission section (87b). The signing part (84) affixes the signature (B2a) onto the specific information (A2a) when the request information (A) is received from the first mover (10). The response information transmission section (87b) is configured to transmit a certificate (B2) including the specific information (A2a) affixed with the signature (B2a) to the first mover (10) through wireless communication.

## Description

### Technical Field

The present invention relates to an authentication system, an authentication method, and an authentication program for authentication of information.

### Background Art

For instance, Patent Literature 1 states that a mover corresponding to a working machine in the Patent Literature transmits and receives information, and that various kinds of information may be given a signature or a digital signature.

### Citation List

### Patent Literature

Patent Literature 1: Japanese Unexamined Patent Publication No. 2020-167509

Patent Literature 1 fails to describe a specific way of affixing a signature onto information. For example, affixing a signature onto information by an existing certification authority may lead to authentication of the information. Unfortunately, asking the existing certification authority for authentication or certification may result in spending much time and costing a lot to get authenticated or certified.

### Summary of Invention

An object of the present invention is to provide an authentication system, an authentication method, and an authentication program for facilitating authentication of specific information which a mover utilizes.

The present invention provides an authentication system. The authentication system includes: a first mover that is configured to travel; and a second mover that is configured to travel and independent of the first mover. The first mover includes a request information transmission section. The request information transmission section transmits, to the second mover through wireless communication, request information indicating a request for a signature to be affixed on specific information. The second mover includes a signing part and a response information transmission section. The signing part affixes the signature onto the specific information when the request information is received from the first mover. The response information transmission section is configured to transmit a certificate including the specific information affixed with the signature to the first mover through wireless communication.

The present invention further provides an authentication method. The authentication method is for a first mover that is configured to travel and a second mover that is configured to travel and independent of the first mover. The authentication method includes a request information transmission step, a signing step, and a response information transmission step. The request information transmission step makes the first mover transmit, to the second mover through wireless communication, request information indicating a request for a signature to be affixed on specific information. The signing step makes the second mover affix the signature onto the specific information when the second mover receives the request information from the first mover. The response information transmission step makes the second mover transmit a certificate including the specific information affixed with the signature to the first mover through wireless communication.

The present invention further provides an authentication program. The authentication program includes causing a computer to execute a request information transmission step, a signing step, and a response information transmission step. The computer executes the authentication program for authentication between a first mover that is configured to travel and a second mover that is configured to travel and independent of the first mover. The request information transmission step makes the first mover transmit, to the second mover through wireless communication, request information indicating a request for a signature to be affixed on specific information. The signing step makes the second mover affix the signature onto the specific information when the second mover receives the request information from the first mover. The response information transmission step makes the second mover transmit a certificate including the specific information affixed with the signature to the first mover through wireless communication.

### Brief Description of Drawings

Fig. 1 illustrates a first mover, a second mover, and other elements in an authentication system.
Fig. 2 is a block diagram of the authentication system illustrated in Fig. 1.
Fig. 3 is a flowchart showing an operation of the first mover in Fig. 2.
Fig. 4 is a flowchart showing an operation of the second mover in Fig. 2.
Fig. 5 is an illustration of a first relative position notification section in Fig. 2.
Fig. 6 is a flowchart showing an operation of a first mover in a first modified embodiment of the present invention.
Fig. 7 is a flowchart showing an operation of a second mover in a third modified embodiment of the present invention.
Fig. 8 is a flowchart showing an operation of a second mover in a fourth modified embodiment of the present invention.

### Description of Embodiments

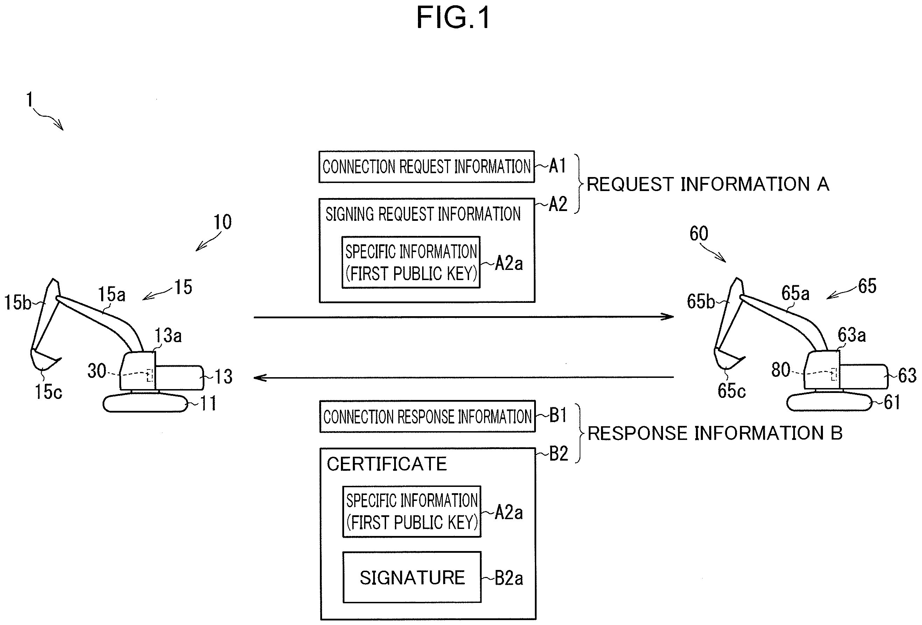

An authentication system 1 according to each embodiment of the present invention will be described with reference to Fig. 1 to Fig. 8.

As illustrated in Fig. 1, the authentication system 1 is a system for authentication of specific information A2a which a first mover 10 (a mover) has by a second mover 60 (a mover). In the authentication system 1, the second mover 60 affixes a signature B2a or a digital signature onto the specific information A2a which the first mover 10 has, and the first mover 10 receives the specific information A2a affixed with the signature B2a (corresponding to a certificate B2 or a digital certificate). The authentication system 1 includes the first mover 10 and the second mover 60.

The first mover 10 (the mover) is a mover that makes a request for the signature B2a to be affixed on the specific information A2a. The first mover 10 is configured to travel or configured to move. The authentication system 1 here is provided with one or more first movers 10. Examples of the first mover 10 may include a working machine that performs a work, a construction machine that performs a construction work, an excavator, and a crane. Hereinafter, the first mover 10 is mainly described as an excavator. The first mover 10 may be configured to be autonomous driving. The first mover 10 may be manipulated by an operator in a first operating compartment 13a (to be described later) in some cases, and may be remotely operated in other cases. The first mover 10 includes a first lower traveling body 11, a first upper slewing body 13, a first attachment 15, and a first controller 30 or a computer.

The first lower traveling body 11 is configured to travel on a traveling surface, such as, on the ground. The first lower traveling body 11 may include a crawler, or include a wheel.

The first upper slewing body 13 is slewably attached to the first lower traveling body 11. The first upper slewing body 13 has the first operating compartment 13a. The first operating compartment 13a allows the operator to manipulate the first mover 10.

The first attachment 15 performs a work, and has, for example, a boom 15a, an arm 15b, and a leading end attachment 15c. The boom 15a is attached to the first upper slewing body 13 in a tiltable manner, that is, rotatably in an up-down direction. The arm 15b is rotatably attached to the boom 15a. The leading end attachment 15c is provided on a distal end of the first attachment 15 and rotatably attached to the arm 15b. The leading end attachment 15c may be, for example, a bucket to excavate and scoop a work target, a device (such as a grapple and a nibbler) to sandwich the work target, or a device (such as a breaker) that crushes and demolishes the work target.

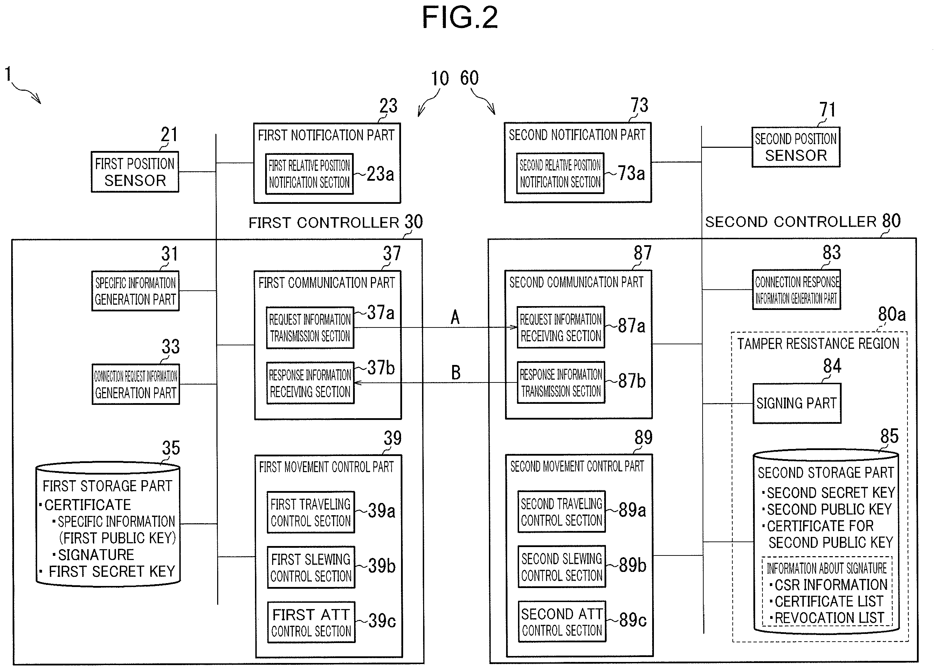

The first mover 10 further includes a first position sensor 21 and a first notification part 23. The first position sensor 21 (see Fig. 2) detects a position of the first mover 10. For instance, the first position sensor 21 shown in Fig. 2 detects a position of the first mover 10 on a worksite. The first position sensor 21 may be mounted to the first mover 10 or may be provided outside the first mover 10. The first position sensor 21 may detect the position with a positioning system (e.g., a satellite positioning, navigation and timing system). The positioning system may be the satellite positioning, navigation and timing system, for example, a global navigation satellite system (GNSS). The positioning system may adopt a total station. The first position sensor 21 may detect the position of the first mover 10 on the basis of an image (a two-dimensional distance image or a three-dimensional distance image) showing the first mover 10. For instance, the "position of the first mover 10" detected by the first position sensor 21 may take an average value of values about positions of the first mover 10 respectively detected by a plurality of sensors (e.g., a plurality of positioning systems or a plurality of image sensors).

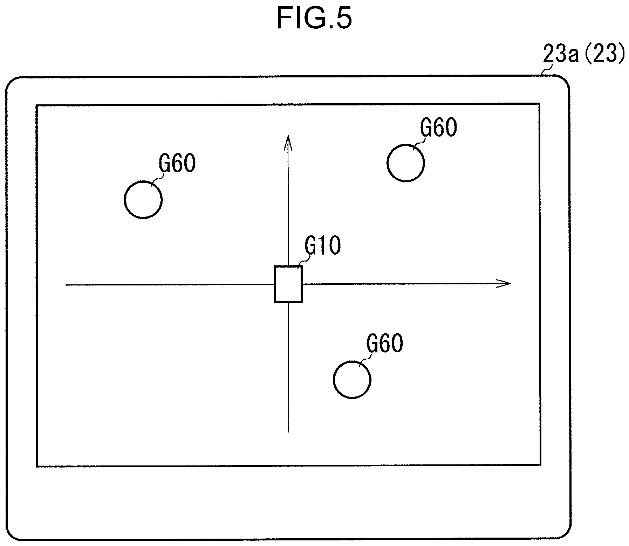

The first notification part 23 gives a notification of information to the operator or a person. The first notification part 23 may be provided to the first mover 10, for example, may be provided in the first operating compartment 13a (see Fig. 1). The first notification part 23 may be provided outside the first mover 10, for example, may be provided to a remote operation part for remotely operating the first mover 10, or may be provided to an information terminal (e.g., a tablet, a smartphone, or a personal computer). The first notification part 23 may give the notification with optics, for example, may execute the notification through displaying onto a screen or a monitor (see Fig. 5). The first notification part 23 may give the notification with a sound, for example, give the notification with a voice.

For instance, the first notification part 23 may give a notification indicating a success of receiving response information B (to be described later) by the first mover 10 from the second mover 60, or may give a notification indicating a failure at receiving the response information B by the first mover 10. The first notification part 23 may give, for example, a notification or guidance (to be described in detail later) encouraging the operator to perform a manipulation for making the first mover 10 move (such as travel and slew) in the failure at receiving the response information B by the first mover 10. The first notification part 23 has a first relative position notification section 23a or a relative position notification section.

The first relative position notification section 23a or the relative position notification section gives a notification of information about relative positions of the first mover 10 and the second mover 60 (see Fig. 5). The first relative position notification section 23a gives, for example, a notification indicating a direction in which the first mover 10 has to move (e.g., travel or slew) to show an index of a movement (to be described later) in the failure at receiving the response information B by the first mover 10 from the second mover 60. The first relative position notification section 23a gives a notification of information about relative positions of the first mover 10 and the second mover 60 on the basis of the position of the first mover 10 detected by the first position sensor 21 and the position of the second mover 60 detected by a second position sensor 71 (to be described later).

The first controller 30 includes a computer which executes: inputting and outputting of a signal; computation (processing); and storage of information. For instance, the operability of the first controller 30 comes into effect when a computation part (not shown) executes a program stored in a first storage part 35. The first controller 30 controls the operation of the first mover 10 and executes communication. The first controller 30 is mounted at a predetermined position of the first mover 10, for example, is provided in the first operating compartment 13a (see Fig. 1). The first controller 30 has a specific information generation part 31, a connection request information generation part 33, the first storage part 35, a first communication part 37, and a first movement control part 39.

The specific information generation part 31 generates the specific information A2a shown in Fig. 1. The specific information A2a is information indicating a request for the signature B2a to the second mover 60, that is, information to be authenticated by the second mover 60. For instance, the specific information A2a includes information for specifying the first controller 30. The specific information A2a includes, for example, key information. Here, the specific information generation part 31 serves as a key information generation part. For example, the key information is utilized for authentication of information, tampering detection, or encryption. The specific information A2a includes, for example, a public key (referred to as a "first public key"). The specific information generation part 31 or an information generation part shown in Fig. 2 may generate information other than the specific information A2a (see Fig. 1). The "information other than the specific information A2a" may include, for example, a secret key (referred to as a "first secret key"). For instance, the specific information generation part 31 may simultaneously generate a first public key and a first secret key to be paired with the first public key.

The connection request information generation part 33 generates connection request information A1 (see Fig. 1). In this regard, refer to the description about the request information transmission section 37a for the connection request information A1.

The first storage part 35 stores information. For instance, the first storage part 35 stores the certificate B2 (see Fig. 1) received from the second mover 60. For example, the first storage part 35 stores the secret key or the first secret key generated by the specific information generation part 31. The first storage part 35 stores a program to make the first controller 30 come into effect. At least a part of the first storage part 35 may be disposed in a region having tamper resistance. In this regard, refer to the description about a tamper resistance region 80a in the second mover 60. The remaining elements of the first controller 30 including the specific information generation part 31, the first communication part 37, and other elements may be disposed in the region having the tamper resistance in the same manner as the first storage part 35.

The first communication part 37 (an information transmitting and receiving device, or a communication module) allows the first mover 10 to transmit and receive information to and from the outside of the first mover 10. The first communication part 37 communicates with the second mover 60 (a second communication part 87). The first communication part 37 may communicate with another entity except the second mover 60. For instance, the first communication part 37 may communicate with a server or a management device, or communicate with another mover except the second mover 60. The first communication part 37 may communicate with a receiver (an unillustrated third party) that receives the specific information A2a (see Fig. 1) except the second mover 60.

The first communication part 37 transmits request information A to be described later and receives the response information B through wireless communication. The first communication part 37 performs, for example, near-filed communication, specifically, performs communication through, for example, Wi-Fi. In this case, the first communication part 37 does not need to perform cellular long-distance communication.

The first communication part 37 and the second mover 60 (the second communication part 87) preferably communicate with each other directly without a relay. The direct communication leads to a reduction in the possibility of attack to information in progress of the communication. In need of such a relay for the communication, a smaller number of relays is preferable between the first communication part 37 and the second communication part 87.

The first communication part 37 may be configured to perform the long-distance communication. The first communication part 37 may transmit and receive information except the request information A and except the response information B through wireless communication or wired communication. The first communication part 37 has the request information transmission section 37a and a response information receiving section 37b.

The request information transmission section 37a transmits the request information A to the second mover 60. It is noted that the meaning of "transmitting the request information A to the second mover 60" includes a failure at receiving, by the second mover 60, the request information A despite transmission of the request information A to the second mover 60, as well as a success of receiving, by the second mover 60, the request information A having been transmitted to the second mover 60.

The request information A indicates a request for the signature B2a on the specific information A2a shown in Fig. 1. For instance, the request information A includes the connection request information A1 and signing request information A2.

The connection request information A1 indicates a request for connection to the second mover 60 to communicate therewith for the signature B2a to be affixed on the specific information A2a.

The signing request information A2 indicates a request for the signature B2a and includes the specific information A2a. For instance, the signing request information A2 corresponds to a certificate B2 having yet to be affixed with the signature B2a. The signing request information A2 includes at least the specific information A2a (e.g., the first public key) generated by the specific information generation part 31 (see Fig. 2). The signing request information A2 may include information identifying the first mover 10. Specifically, for example, the signing request information A2 may include a certificate signing request (CSR). The connection request information A1 and the signing request information A2 may be independent of each other, that is, may be transmitted to the second mover 60 at different times, or may constitute an information group, that is, may be sequentially transmitted to the second mover 60. When the connection request information A1 and the signing request information A2 is defined to constitute the information group, the specific information generation part 31 and the connection request information generation part 33 shown in Fig. 2 may constitute a single "information generation part".

The response information receiving section 37b receives the response information B from the second mover 60 (to be described later).

The first movement control part 39 or a control module controls a movement of the first mover 10. The first movement control part 39 may control the movement of the first mover 10 through autonomous driving. The first movement control part 39 may control the movement of the first mover 10 in accordance with a manipulation by the operator. The first movement control part 39 has a first traveling control section 39a, a first slewing control section 39b, and a first attachment control section 39c. In Fig. 2, the word "attachment" in the term "first attachment control section 39c" is abbreviated as "ATT". The abbreviation is applied to the expression for the "second attachment control section 89c" as well.

The first traveling control section 39a controls traveling of the first mover 10 to control a movement of the first lower traveling body 11 illustrated in Fig. 1. For instance, the first traveling control section 39a controls a motor for traveling (a traveling motor) in the first lower traveling body 11.

The first slewing control section 39b (see Fig. 2) controls slewing of the first upper slewing body 13 with respect to the first lower traveling body 11 (hereinafter, simply referred to as "slewing of the first upper slewing body 13"). For instance, the first slewing control section 39b controls a motor for slewing (a slewing motor) the first upper slewing body 13.

The first attachment control section 39c (see Fig. 2) controls a movement of the first attachment 15. For instance, the first attachment control section 39c controls a rotation (tilting) of the boom 15a with respect to the first upper slewing body 13, a rotation of the arm 15b about the boom 15a, and a rotation of the leading end attachment 15c with respect to the arm 15b. The first attachment control section 39c controls, for example, a hydraulic cylinder for moving the first attachment 15.

The second mover 60 (the mover) is a mover that affixes the signature B2a onto the specific information A2a, that is, authenticates the specific information A2a, in response to the request from the first mover 10. The second mover 60 is independent of the first mover 10, that is, separately provided from the first mover 10. For instance, the second mover 60 is arranged on the same worksite as the first mover 10. The authentication system 1 is provided with one or more second movers 60. The second mover 60 has similarities to and differences from the first mover 10. Hereinafter, the differences of the second mover 60 from the first mover 10 will be mainly described. The second mover 60 mainly differs from the first mover 10 in a second controller 80 or a computer.

The second mover 60 includes a second lower traveling body 61 (corresponding to the first lower traveling body 11) that is configured to travel on a traveling surface, such as on the ground, a second upper slewing body 63 (corresponding to the first upper slewing body 13), and a second attachment 65 (corresponding to the first attachment 15). The second upper slewing body 63 has a second operating compartment 63a (corresponding to the first operating compartment 13a). As shown in Fig. 2, the second mover 60 further includes the second position sensor 71 (corresponding to the first position sensor 21) and a second notification part 73 (corresponding to the first notification part 23). The second notification part 73 has a second relative position notification section 73a or a relative position notification section (corresponding to the first relative position notification section 23a).

The second controller 80 includes a computer which executes: inputting and outputting of a signal; computation (processing); and storage of information. For instance, the operability of the second controller 80 comes into effect when a computation part (not shown) executes a program stored in a second storage part 85. The second controller 80 controls the operation of the second mover 60 and executes communication. The second controller 80 is mounted at a predetermined position of the second mover 60, for example, provided in the second operating compartment 63a (see Fig. 1).

The second controller 80 (the second mover 60) may have a function of, for example, a certification authority (CA), or have a function similar to the function of the certification authority. For instance, the second controller 80 serves as an intermediate certification authority to certify legitimacy thereof with a certificate issued by a higher-level certification authority. The second mover 60 is, for example, defined as a certification authority mover or a certification authority working machine having the function of the certification authority under the definition of the first mover 10 as a general mover or a general working machine.

The second controller 80 has the tamper resistance region 80a, a connection response information generation part 83, a signing part 84, the second storage part 85, the second communication part 87, and the second movement control part 89.

The tamper resistance region 80a has tamper resistance and is called a trusted execution environment (TEE). The tamper resistance region 80a is inaccessible from an outside of the tamper resistance region 80a to attain a reduction in attack, such as tampering and a theft, from the outside. Specifically, the tamper resistance region 80a is, for example, "TrustZone (registered trademark)" available from Arm Ltd. or "Software Guard Extension (SGX)" available from Intel Corporation. For instance, the signing part 84 and the second storage part 85 are preferably disposed in the tamper resistance region 80a. At least a part of the second communication part 87 may be disposed in the tamper resistance region 80a (not shown). Specifically, for example, the tamper resistance region 80a may be located in a subscriber identity module (SIM) card provided in the second communication part 87. The remaining elements of the second controller 80 including, for example, the connection response information generation part 83 may be disposed in the tamper resistance region 80a in the same manner as the signing part 84, the second storage part 85, and the second communication part 87.

The connection response information generation part 83 or a response generation device generates connection response information B1 shown in Fig. 1. The connection response information B1 is information or response information about a response to the connection request information A1 transmitted from the first mover 10. The connection response information B1 indicates establishment of connection between the first mover 10 and the second mover 60 to communicate with each other.

The signing part 84 (see Fig. 2) affixes the signature B2a onto the specific information A2a when the request information A is received from the first mover 10. The signing part 84 generates the signature B2a on the basis of the signing request information A2 received from the first mover 10. Specifically, the signature B2a includes, for example, information resulting from encrypting a hash value of information (e.g., the signing request information A2) including the specific information A2a with a secret key (hereinafter, referred to as a "second secret key") generated by the second controller 80.

The signing part 84 (see Fig. 2) generates or issues the certificate B2. The certificate B2 includes the specific information A2a affixed with the signature B2a. Specifically, the certificate B2 includes information corresponding to the specific information A2a having been received from the first mover 10 and affixed with the signature B2a by the second mover 60, the signature B2a having been generated by the signing part 84. The certificate B2 may include information in addition to the information described above. Specifically, for instance, the certificate B2 may include the signing request information A2 (e.g., the specific information A2a and information identifying the first mover 10), and the signature B2a. As described above and shown in Fig. 2, the signing part 84 is preferably disposed in the tamper resistance region 80a.

The second storage part 85 or a storage part stores information. For example, the second storage part 85 may store a public key (referred to as a "second public key") and the secret key or the second secret key generated by the second controller 80. The second storage part 85 may store a certificate or a digital certificate for the second public key. The second storage part 85 may store a program to make the second controller 80 come into effect.

The second storage part 85 stores information about the signature B2a (see Fig. 1). Specifically, for instance, the second storage part 85 may store the certificate B2 (see Fig. 1) generated by the signing part 84. The second storage part 85 may store the signing request information A2 (see Fig. 1, e.g., CSR information) received from the first mover 10. The second storage part 85 may store a list or a certificate list for managing a plurality of certificates B2 generated by the signing part 84. The second storage part 85 may store a list or a revocation list of unavailable certificates B2.

The second storage part 85 is preferably disposed in the tamper resistance region 80a as described above. At least a part of the second storage part 85 may be disposed in a region having no tamper resistance and being different from the tamper resistance region 80a, for example, may be arranged in a typical flash memory. The remaining elements of the second controller 80 may be disposed in such a region in the same manner as the second storage part 85.

The second communication part 87 (an information transmitting and receiving device, or a communication module) allows the second mover 60 to transmit and receive information to and from an outside of the second mover 60. The second communication part 87 communicates with the first mover 10, specifically, with the first communication part 37. The second communication part 87 may communicate with another entity except the first mover 10 in the same manner that the first communication part 37 may communicate with another entity except the second mover 60. For instance, the second communication part 87 may communicate with a receiver (the aforementioned "third party") that receives the specific information A2a (see Fig. 1) from the first mover 10. The second communication part 87 may communicate with, for example, a higher-level certification authority (not shown). The second communication part 87 has a request information receiving section 87a and a response information transmission section 87b.

The request information receiving section 87a can receive the request information A from the first mover 10 (the first communication part 37). Specifically, when a reception strength of radio waves transmitted from the first communication part 37 and received by the second communication part 87 is not lower than a predetermined value, the request information receiving section 87a can receive the request information A. The request information receiving section 87a can receive the connection request information A1 (see Fig. 1). The request information receiving section 87a can receive the signing request information A2 (see Fig. 1).

The response information transmission section 87b can transmit the response information B to the first mover 10. The response information B includes the above-described connection response information B1 (see Fig. 1) and the above-described certificate B2 (see Fig. 1).

The second movement control part 89 or a control module controls a movement of the second mover 60 in the same manner that the first movement control part 39 controls the movement of the first mover 10. The second movement control part 89 has a second traveling control section 89a (corresponding to the first traveling control section 39a), a second slewing control section 89b (corresponding to the first slewing control section 39b), and a second attachment control section 89c (corresponding to the first attachment control section 39c).

The authentication system 1 in the embodiment is configured to operate as described below. An authentication method in the embodiment is executed as follows. An authentication program in the embodiment is configured to cause each computer (the first controller 30, the second controller 80) to execute the following process.

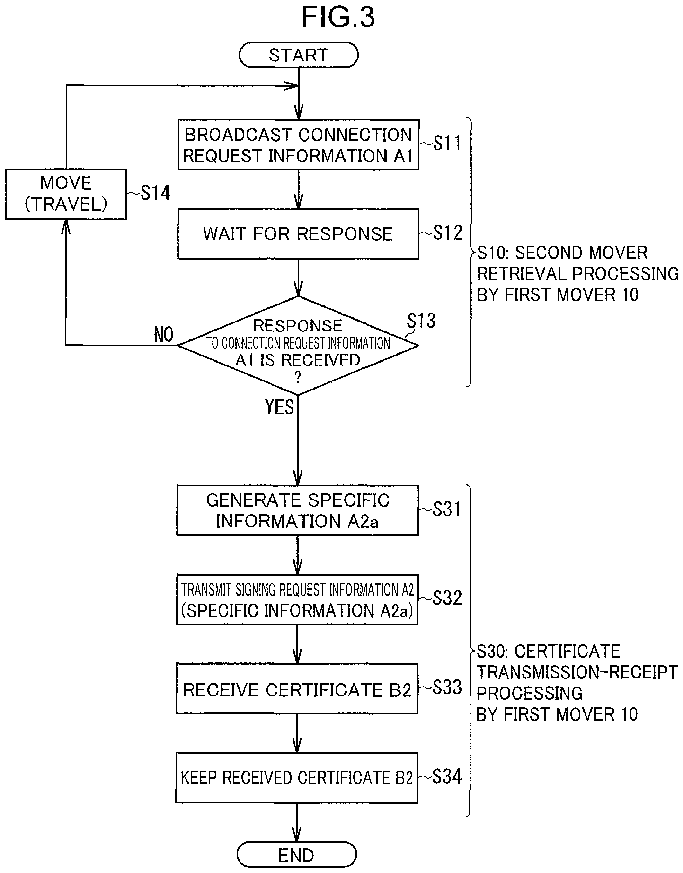

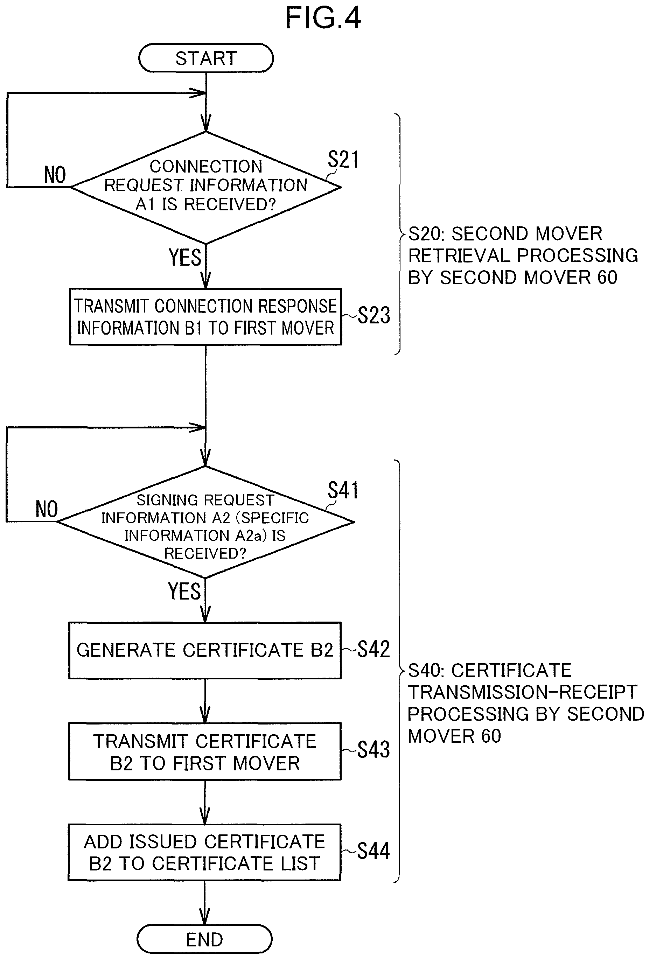

In the authentication system 1 as illustrated in Fig. 1, the first mover 10 transmits specific information A2a to the second mover 60, the second mover 60 affixes a signature B2a onto the specific information A2a, and the first mover 10 receives the specific information A2a affixed with the signature B2a (corresponding to a certificate B2). As shown in Fig. 3 and Fig. 4, the operation is classified into second mover retrieval processing S10 and S20, and certificate transmission-receipt processing S30 and S40.

### Second mover retrieval processing S10 and S20

In the second mover retrieval processing S10 and S20, e.g., vicinity certification authority retrieval processing, the first mover 10 (see Fig. 1) retrieves a second mover 60 (see Fig. 1) located in the vicinity of the first mover 10. The second mover retrieval processing S10 and S20 will be described individually with reference to Fig. 3 showing an operation of the first mover 10 including the second mover retrieval processing S10 by the first mover 10 and with reference to Fig. 4 showing an operation of the second mover 60 including the second mover retrieval processing S20 by the second mover 60.

### Second mover retrieval processing S10 by the first mover 10

A specific example of the second mover retrieval processing S10 by the first mover 10 as shown in Fig. 3 will be described below. Hereinafter, steps S11 to S13 in the second mover retrieval processing S10 by the first mover 10 will be described with reference to Fig. 3.

In step S11, the first controller 30 (specifically, the request information transmission section 37a) shown in Fig. 2 transmits request information A (a request information A transmission step). Specifically, the first controller 30 transmits connection request information A1 (see Fig. 1) (a connection request information A1 transmission step). For instance, the request information transmission section 37a broadcasts the connection request information A1. At the broadcasting, the request information transmission section 37a may further transmit signing request information A2 (see Fig. 1).

In step S12, the first controller 30 waits for a response from the second controller 80 (a response information B waiting step). Specifically, the first controller 30 waits until receiving connection response information B1 (see Fig. 1) to be transmitted from the second controller 80 (a connection response information B1 waiting step).

In step S13, the first controller 30 determines whether the response information receiving section 37b receives the connection response information B 1, that is, determines whether a response to the connection request information A1 (see Fig. 1) is received (a connection response information B1 receipt determination step, see Fig. 1). When the response information receiving section 37b receives the connection response information B1 (YES in step S13), the first controller 30 leads the process to the certificate transmission-receipt processing S30 by the first mover 10. When the response information receiving section 37b does not receive the connection response information B1 (NO in step S13), the process proceeds to step S14.

### Summary of step S14 and other steps

In a case where the first mover 10 receives no response to the transmitted request information A from the second mover 60 (NO in step S13), the first mover 10 operates as follows. In this case, the first mover 10 (the first controller 30) retransmits the request information A to the second mover 60 (step S11) after at least a portion of the first mover 10 moves (step S14). The movement of at least the portion of the first mover 10 may be a movement or traveling of an entirety of the first mover 10, may be a movement or slewing of the first upper slewing body 13 with respect to the first lower traveling body 11, or may be a movement of the first attachment 15 with respect to the first upper slewing body 13. Hereinafter, a specific example of the traveling of the first mover 10 will be mainly described.

In step S14, at least a portion of the first mover 10 moves, that is, mechanically acts (a first mover 10 movement step). In this example, the first mover 10 travels (a first mover 10 traveling step).

An example reason why the first mover 10 travels, in step S14, in the case where the first mover 10 receives no response to the transmitted request information A from the second controller 80 will be described below. In the case of no response from the second controller 80, the first mover 10 can retrieve, by moving to change its position, the second mover 60 which is in the vicinity of the first mover 10. Specifically, as a result of the change in the position of the first mover 10, the second communication part 87 may have an increased reception strength of receiving radio waves transmitted from the first communication part 37, and thus, the second mover 60 is more likely to receive the request information A.

The movement or traveling of the first mover 10 in step S14 may be executed through autonomous driving by the first controller 30, or may be executed through manipulation by an operator.

### Movement or traveling of the first mover 10 through autonomous driving

A specific example of the movement or traveling of the first mover 10, in step S14, through autonomous driving will be described below. For instance, the first controller 30 has a condition to start the movement or traveling of the first mover 10 (a first mover 10 movement condition, e.g., a first mover 10 traveling condition). For instance, the first mover 10 movement condition includes a condition of no response from the second controller 80 after a lapse of a predetermined time period (a first mover 10 movement start time threshold) from the start of the transmission of the request information A (specifically, the connection request information A1, see Fig. 1) by the first controller 30. When the first controller 30 determines that the first mover 10 movement condition (e.g., the first mover 10 traveling condition) is satisfied, the first movement control part 39 makes the first mover 10 move or travel through autonomous driving.

At this time, the first controller 30 preferably makes the first mover 10 travel in a direction in which the first mover 10 approaches the second mover 60. Specifically, for example, the first position sensor 21 detects a position of the first mover 10 and the second position sensor 71 detects a position of the second mover 60. The first controller 30 calculates the position of the second mover 60 relative to the first mover 10 on the basis of detection values from the first position sensor 21 and the second position sensor 71. The first traveling control section 39a makes the first mover 10 (the first lower traveling body 11) travel in a direction toward the second mover 60.

### Movement or traveling of the first mover 10 through manual operation

A specific example of the movement or traveling of the first mover 10, in step S14, through manipulation by an operator will be described below. When the first controller 30 determines that the first mover 10 movement condition (e.g., the first mover 10 traveling condition) is satisfied, the first notification part 23 outputs a notification. Examples of the notification to be output by the first notification part 23 include a notification encouraging the operator to perform a manipulation for making the first mover 10 move or travel. The operator having received the notification performs the manipulation for making the first mover 10 move or travel.

Here, an unconsidered manipulation by the operator to make the first mover 10 move or travel would lead to an increase in the cost for the movement or traveling due to, for example, fuel consumption and a required time. To avoid the situation, the first relative position notification section 23a preferably gives a notification of information about relative positions of the first mover 10 and the second mover 60. For instance, the first relative position notification section 23a may give, to the first mover 10, a notification of information indicating a direction or an orientation in which the second mover 60 is located. The first relative position notification section 23a may give, for example, a notification of information indicating a direction in which the operator has to make the first mover 10 move or travel. The first relative position notification section 23a may give, for example, a notification of information about a distance from the first mover 10 to the second mover 60. In a case where a plurality of second movers 60 is present, the first relative position notification section 23a may give a notification of respective positions of the second movers 60 relative to the first mover 10. In the case of the plurality of second movers 60, the first relative position notification section 23a may give a notification indicating a specific second mover 60 that is closest to the first mover 10 among the second movers 60.

The first relative position notification section 23a may give each notification about the relative positions of the first mover 10 and the second mover 60 with a sound or by displaying the information. For instance, the first relative position notification section 23a may display an image showing the relative positions of the first mover 10 and the second mover 60 in a top view. Specifically, for example, the first relative position notification section 23a may display an image G10 showing the first mover 10 (see Fig. 1) and an image G60 showing the second mover 60 (see Fig. 1) as illustrated in Fig. 5.

### Retransmission of the request information A in step S11

The first controller 30 shown in Fig. 2 retransmits the request information A (the connection request information A1, see Fig. 1) to the second mover 60 (the process returns to step S11) after the first mover 10 moves or travels in step S14. Thereafter, the first controller 30 executes step S12 and step S13 again.

The retransmission of the request information A (step S11) may be automatically executed, or may be executed through manipulation by the operator.

A specific example of the automatic retransmission of the request information A (step S11) will be described below. For instance, the first controller 30 may automatically retransmit the request information A when the first controller 30 determines that an amount of the movement (e.g., a movement distance and a movement time) of the first mover 10 in step S14 exceeds a predetermined amount (a request information A retransmission threshold).

A specific example of the retransmission of the request information A (step S11) through manipulation by the operator will be described below. The first notification part 23 gives a notification when the first controller 30 determines that an amount of the movement of the first mover 10 in step S14 exceeds the predetermined amount (the request information A retransmission threshold). At this time, the first notification part 23 gives a notification encouraging the operator to perform a manipulation, such as a switching manipulation, to transmit the request information A.

### Second mover retrieval processing S20 by the second mover 60

A specific example of the second mover retrieval processing S20 by the second mover 60 as shown in Fig. 4 will be described below. Hereinafter, steps S21 and S23 in the second mover retrieval processing S20 by the second mover 60 will be described with reference to Fig. 4.

In step S21, the second controller 80 shown in Fig. 2 determines whether the request information A (specifically, the connection request information A1, see Fig. 1) is received from the first controller 30 (a request information A receipt determination step). In a case where the request information receiving section 87a does not receive the request information A (NO in step S21), the second controller 80 is on standby for receiving the connection request information A1 (a connection request information A1 receipt standby step). When the request information receiving section 87a receives the request information A (YES in step S21), the process proceeds to step S23.

In step S23, the second controller 80 (the response information transmission section 87b) responds to the connection request information A1 (see Fig. 1). Specifically, the second controller 80 transmits the connection response information B1 (see Fig. 1) to the first controller 30 (a connection response information B1 transmission step). Subsequently, the process proceeds to the certificate transmission-receipt processing S40 by the second mover 60.

### Certificate transmission-receipt processing S30 and S40

In the certificate transmission-receipt processing S30 shown in Fig. 3 and the certificate transmission-receipt processing S40 shown in Fig. 4, the first mover 10 illustrated in Fig. 1 transmits the signing request information A2 to the second mover 60, and the second mover 60 transmits the certificate B2 (corresponding to the specific information A2a affixed with the signature B2a) to the first mover 10. The certificate transmission-receipt processing S30 and S40 will be described individually with reference to Fig. 3 showing the operation by the first mover 10 including the certificate transmission-receipt processing S30 by the first mover 10 and with reference to in Fig. 4 showing the operation by the second mover 60 including the certificate transmission-receipt processing S40 by the second mover 60.

### Certificate transmission-receipt processing S30 by the first mover 10

A specific example of the certificate transmission-receipt processing S30 by the first mover 10 as shown in Fig. 3 will be described below. Hereinafter, steps S31 to S34 in the certificate transmission-receipt processing S30 by the first mover 10 will be described with reference to Fig. 3.

In step S31, the specific information generation part 31 shown in Fig. 2 generates the specific information A2a (e.g., the first public key, see Fig. 1) (a specific information A2a generation step). As described above, the specific information generation part 31 may generate information (e.g., the first secret key) other than the specific information A2a.

In step S32, the first controller 30 (the request information transmission section 37a) transmits the signing request information A2 (see Fig. 1) to the second controller 80 (the request information receiving section 87a) (a signing request information A2 transmission step). For instance, the first controller 30 transmits the signing request information A2 encrypted with predetermined key information.

In step S33, the first controller 30 (the response information transmission section 87b) receives the certificate B2 (see Fig. 1) from the second controller 80 (the response information transmission section 87b). When the received information is encrypted, the first controller 30 decrypts the received information with predetermined key information.

In step S34, the first controller 30 makes the first storage part 35 keep or store the received certificate B2 (see Fig. 1).

### Certificate transmission-receipt processing S40 by the second mover 60

A specific example of the certificate transmission-receipt processing S40 by the second mover 60 as shown in Fig. 4 will be described below. Hereinafter, steps S41 to S44 in the certificate transmission-receipt processing S40 by the second mover 60 will be described with reference to Fig. 4.

In step S41, the second controller 80 shown in Fig. 2 determines whether the request information receiving section 87a receives the signing request information A2 (see Fig. 1, a signing request information A2 receipt determination step), that is, receives the specific information A2a (see Fig. 1, a specific information A2a receipt determination step). When the received information is encrypted, the second controller 80 decrypts the received information with predetermined key information. In a case where the request information receiving section 87a does not receive the signing request information A2 (NO in step S41), the second controller 80 is on standby for receiving the signing request information A2 (a signing request information A2 receipt standby step). When the request information receiving section 87a receives the signing request information A2 (YES in step S41), the process proceeds to step S42.

In step S42, the signing part 84 generates the signature B2a (see Fig. 1) (a signature B2a generation step). The signing part 84 further defines a certificate B2 (see Fig. 1) to include the specific information A2a (see Fig. 1) affixed with the signature B2a (a certificate B2 generation step).

In step S43, the second controller 80 (the response information transmission section 87b) transmits the certificate B2 to the first controller 30 (the response information receiving section 37b). For instance, the second controller 80 transmits the certificate B2 encrypted with predetermined key information to the first controller 30.

In step S44, the second controller 80 makes the second storage part 85 (e.g., a certificate list) keep, i.e., add and store, the certificate B2 (see Fig. 1) generated by the signing part 84.

### Way of utilizing the certificate B2

For instance, the certificate B2 shown in Fig. 1 is utilized in a manner described below. The first mover 10 (the first controller 30) transmits the certificate B2 including the specific information A2a and given the signature B2a to a third party (not shown). The "third party" is a receiver of the certificate B2 except the first mover 10 and except the second mover 60. The third party verifies validity or invalidity, i.e., legitimacy or illegitimacy, of the specific information A2a with the certificate B2. Specifically, the third party verifies whether the received specific information A2a is transmitted from a legitimate first mover 10 (a legitimate first controller 30) with the certificate B2.

A specific example will be described for verification by the third party to determine validity or invalidity of the specific information A2a including the public key or the first public key with the certificate B2. For instance, the third party calculates a hash value (defined as a "hash value H") of the information (e.g., information corresponding to the signing request information A2) including the specific information A2a through predetermined computation. The third party further decrypts the signature B2a in the certificate B2 with the second public key received from the second mover 60. The signature B2a results from, for example, encrypting a hash value of the signing request information A2 by the second mover 60 with the second secret key. For instance, when information resulting from decrypting the signature B2a by the third party with the second public key agrees with the hash value H, the specific information A2a is determined to be valid, that is, determined as information transmitted from the legitimate first mover 10.

### ON/Off mode of an authentication function

The second mover 60 may have a function or an authentication function of authentication of the specific information A2a, the function being switchable between an ON-mode and an Off-mode. Specifically, any mover which is available as the second mover 60 may be switchable between a mode of serving as the second mover 60 and exerting the function or the authentication function of the signing part 84 (see Fig. 2) and a mode of not serving as the second mover 60 without exerting the function of the signing part 84. More specifically, such a mover which is available as the second mover 60 may be switchable between a mode of exerting respective functions of the connection response information generation part 83, the signing part 84, the request information receiving section 87a, and the response information transmission section 87b shown in Fig. 2, and a mode of not exerting the functions. The mover which is available as the second mover 60 may include the first mover 10. In other words, the first mover 10 may serve as the second mover 60 in the ON-mode of the authentication function. Specifically, the first mover 10 whose specific information A2a shown in Fig. 1 has been a target for authentication may serve as the second mover 60 that authenticates another specific information A2a. A plurality of movers may be allowed to mutually authenticate their specific information A2a among the movers via switching between the ON-mode and the Off-mode of the authentication function. Hereinafter, such a mover which is available as the second mover 60 is simply referred to as the "second mover 60".

For instance, the second mover 60 in the Off-mode of the authentication function may not receive request information A. For example, the second mover 60 in the Off-mode of the authentication function may receive the request information A, but may avoid transmitting the response information B. The second mover 60 in the Off-mode of the authentication function avoids exerting the function of the signing part 84 (see Fig. 2) without affixing the signature B2a onto the specific information A2a. The second mover 60 in the Off-mode of the authentication function may store a program to make the function of the signing part 84 come into effect. Non-execution of the program stored in the second mover 60 to make the function of the signing part 84 come into effect falls within the meaning "avoids exerting the function of the signing part 84".

A specific example of an operation of the second mover 60 in switching from the Off-mode to the ON-mode of the authentication function will be described below. In this example, the second mover 60 receives necessary information to serve as the second mover 60 (e.g., to serve as a certification authority). The "necessary information" includes, for example, information about the signature B2a. The second mover 60 may receive the "necessary information" from another mover, a server, or other element.

The ON/Off-mode switching, that is, the switching between the ON-mode and the Off-mode, of the authentication function may be automatically executed or may be executed through manipulation by the operator.

The ON/Off-mode switching of the authentication function may be automatically executed by the second controller 80. For instance, the second controller 80 may execute the ON/Off-mode switching when a predetermined condition or a predetermined authentication function switching condition is determined to be satisfied. The authentication function switching condition may include a time condition. The authentication function switching condition may include a condition concerning a situation of the second mover 60. For instance, the authentication function switching condition may include a condition of a time period during which the authentication function is continuously kept in the ON-mode. The authentication function switching condition may include a position condition of the second mover 60. The authentication function switching condition may include a condition about a working state of the second mover 60. Specifically, for example, in a case where the second mover 60 is a working machine, the authentication function switching condition may include a condition as to whether the second mover 60 performs a work (e.g., whether the second attachment 65 moves). The authentication function switching condition may include a condition about a situation of a mover which is different from the second mover 60.

The ON/Off-mode switching of the authentication function may be executed through manipulation or switch manipulation by the operator. The ON/Off-mode switching of the authentication function may be executed through manipulation by the operator in the second operating compartment 63a or may be executed through remote operation.

### Other functions of the second mover 60

The second mover 60 may have a function of a general certification authority or may have a function similar to the function of the general certification authority in addition to generation of the certificate B2. The second mover 60 may revoke the certificate B2, for example, at leakage of the first secret key. The second mover 60 may update a list of higher-level certification authorities that the second mover trusts. The list of the higher-level certification authorities may be updated, for example, when a predetermined condition or a predetermined list updating condition is satisfied. The second mover 60 may communicate with such a higher-level certification authority through long-distance communication or multi-hop communication.

### First modified embodiment showing an example of slewing of a first mover 10

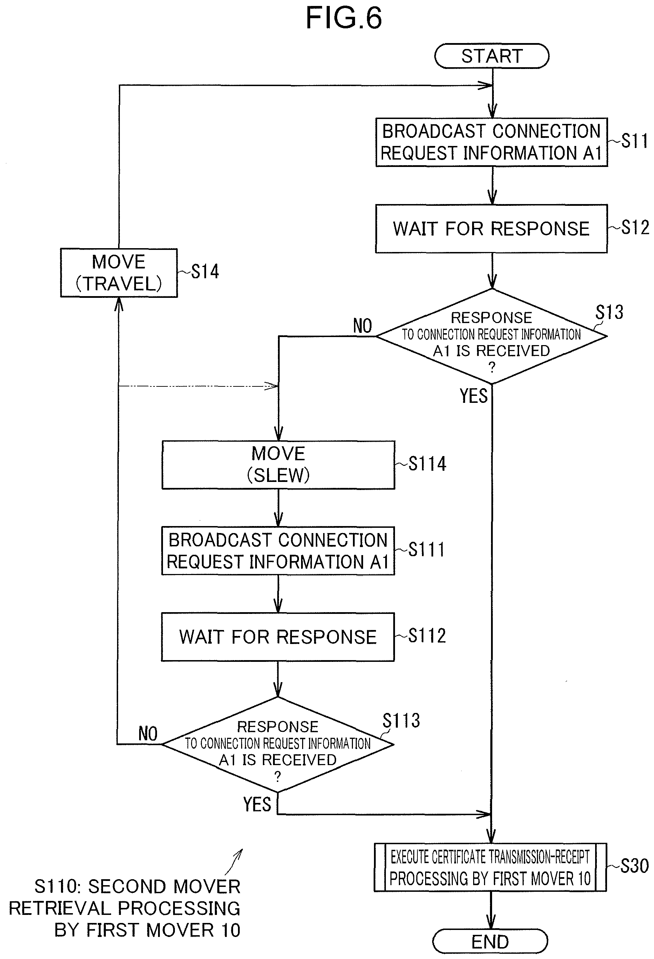

A first modified embodiment of the present invention will be described with reference to Fig. 6 and other drawings. In the preceding embodiment, in a case where the first mover 10 illustrated in Fig. 1 receives no response (NO in step S13 in Fig. 3) to transmitted request information A (e.g., connection request information A1) from the second mover 60, the first mover moves 10 (step S14 in Fig. 3). In the preceding embodiment, the first mover 10 is mainly described to travel in the case of "NO" in step S13 (see Fig. 3). By contrast, a first upper slewing body 13 may slew (step S114 in Fig. 6) in the case of "NO" in step S13 (a first upper slewing body 13 slewing step). Hereinafter, differences of second mover retrieval processing S110 by a first mover 10 in Fig. 6 from the second mover retrieval processing S10 by the first mover 10 in Fig. 3 will be described. Besides, steps S11 to S14 and S111 to S114 in the second mover retrieval processing S110 by the first mover 10 as shown in Fig. 6 will be described with reference to Fig. 6.

In step S114, in the case where the first mover 10 illustrated in Fig. 1 receives no response to transmitted request information A from a second mover 60 (NO in step S13), the first upper slewing body 13 slews (a first upper slewing body 13 slewing step). For instance, the reason will be described below. In the case of no response from a second controller 80, such a change in a direction in which the first upper slewing body 13 faces may allow a second mover 60 to receive the request information A. Specifically, the first upper slewing body 13 may be provided with a first communication part 37 (see Fig. 2). As a result of the change in the direction in which the first upper slewing body 13 faces, a second communication part 87 (see Fig. 2) may have an increased reception strength of receiving radio waves, and thus, the second mover 60 is more likely to receive the request information A.

The slewing of the first upper slewing body 13 in step S114 may be executed through autonomous driving by a first controller 30 shown in Fig. 1, or may be executed through manipulation by an operator in the same manner as the traveling of the first mover 10 in step S14 shown in Fig. 3. The first controller 30 may have a condition to start the slewing of the first upper slewing body 13 (a first upper slewing body 13 slewing condition which is an example of the first mover 10 movement condition) in the same manner as the above-described configuration of the first controller 30 having the "first mover 10 traveling condition".

In step S114, the first upper slewing body 13 may slew one time or a plurality of times (to be described later). For instance, the slewing may be executed a plurality of times at every predetermine slewing angle (e.g., at 45°, to be described later).

### Retransmission of the request information A in step S111

The first controller 30 retransmits, in step S111, the request information A (a request information A retransmission step), that is, connection request information A1 (a connection request information A1 retransmission step), to the second mover 60 after the first upper slewing body 13 slews in step S114.

The retransmission of the request information A (step S111) may be automatically executed, or may be executed through manipulation by the operator in the same manner as "Retransmission of the request information A in step S11" described above. For instance, in the automatic retransmission of the request information A (step Sill), the first controller 30 may automatically retransmit the request information A every time when the first upper slewing body 13 slews at a predetermined slewing angle (e.g., at 45°). At the retransmission, the first controller 30 may retransmit the request information A after the first upper slewing body 13 stops slewing, or may retransmit the request information A while the first upper slewing body 13 slews.

After step S111, the first controller 30 executes step S112 corresponding to step S12 and executes step S113 corresponding to step S13. When a response information receiving section 37b (see Fig. 2) receives connection response information B1 (YES in step S113), the process proceeds to the certificate transmission-receipt processing S30 by the first mover 10.

### Movement of the first mover 10 after retransmission of the request information A in S111

In a case where the first controller 30 (the response information receiving section 37b, see Fig. 2) does not receive connection response information B1 (NO in step S113), the first controller 30 executes, for example, as follows. For instance, in the case of "NO" in step S113, the first controller 30 may slew the first upper slewing body 13 again, that is, may return to step S114. After the determination is "NO" in step S13, the frequency of the slewing in step S114 may be one time or a plurality of times. For instance, in the case of "NO" in step S113, the first controller 30 may make the first mover 10 travel, that is, may proceed to step S14. For example, in a case where no response from the second mover 60 is acquired even after the determination is "NO" in step S13 and the first upper slewing body 13 slews at a predetermined angle (e.g., 360°), the first controller 30 may make the first mover 10 travel (step S14). In this example, only the slewing of the first upper slewing body 13 has the likelihood of acquiring a response from the second mover 60 without traveling of the first mover 10.

In the example shown in Fig. 6, after the determination is "NO" in step S13, the first controller 30 makes the first upper slewing body 13 slew (step S114) and thereafter makes the first mover 10 travel (step 14). Alternatively, after the determination is "NO" in step 13, the first controller 30 may make the first mover 10 travel and thereafter make the first upper slewing body 13 slew, or may simultaneously make the first mover 10 travel and make the first upper slewing body 13 slew.

### Second modified embodiment showing an example of a movement of a first attachment 15

Described in the preceding embodiments are the examples in which the first mover 10 (see Fig. 1) travels (step S14 in Fig. 3) and the first upper slewing body 13 (see Fig. 1) slews (step S114 in Fig. 6) in the case of "NO" in step S13 in Fig. 3 and Fig. 6, respectively. By contrast, in the case of "NO" in step S13, a first attachment 15 (see Fig. 1) may act or move (a first attachment 15 movement step). For example, the first attachment 15 may block radio waves output from a first communication part 37 (see Fig. 2). In this example, as a result of the movement of the first attachment 15 with respect to a first upper slewing body 13, a second communication part 87 (see Fig. 2) may have an increased reception strength of receiving radio waves, that is, radio waves transmitted from the first communication part 37, and thus, a second mover 60 is more likely to receive the request information A. A specific example of a process by a first controller 30 (see Fig. 1) for the movement of the first attachment 15 (see Fig. 1) in the case of "NO" in step S13 is similar to the specific example of the process for the traveling of the first mover 10 or slewing in the case of "NO" in step S13.

### Third modified embodiment showing an example of traveling of a second mover 60

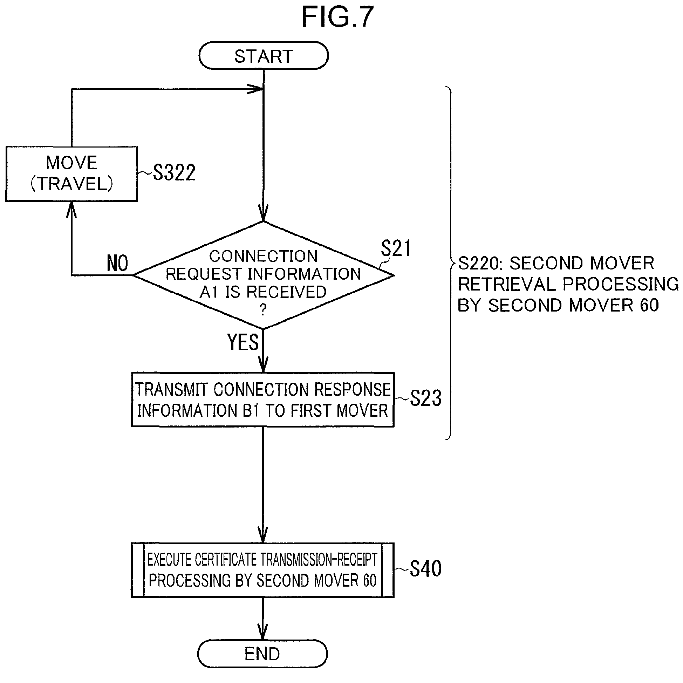

In the preceding embodiment, in the case where the second mover 60 (the second controller 80, the request information receiving section 87a, see Fig. 2) illustrated in Fig. 1 does not receive request information A (NO in step S21, see Fig. 4), the second controller 80 is on standby for receiving connection request information A1. By contrast, in the case of "NO" in step S21, a second controller 80 may make at least a portion of the second mover 60 move, that is, mechanically act (a second mover 60 movement step). The movement of at least a portion of the second mover 60 may be a movement or traveling of an entirety of the second mover 60, may be a movement or slewing of a second upper slewing body 63 with respect to a second lower traveling body 61, or may be a movement of a second attachment 65 with respect to the second upper slewing body 63. Hereinafter, the second mover 60 is mainly described to travel (step S322 in Fig. 7) in the case of "NO" in step S21. Differences of second mover retrieval processing S220 by the second mover 60 in Fig. 7 from the second mover retrieval processing S20 by the second mover 60 in Fig. 4 will be described. Besides, steps S21, S23, and S322 in the second mover retrieval processing S220 by the second mover 60 as shown in Fig. 7 will be described with reference to Fig. 7.

In step S322, in the case where the second mover 60 illustrated in Fig. 1 does not receive request information A (NO in step S21), at least a portion of the second mover 60 moves, that is, mechanically acts (a second mover 60 movement step). In this example, the second mover 60 travels (a second mover 60 traveling step).

In step S322, the reason why the second mover 60 travels in the case where the second mover 60 does not receive the request information A is similar to the reason why the first mover 10 travels in step S14 in Fig. 3.

The movement of the second mover 60 illustrated in Fig. 1 in step S322 may be executed through autonomous driving by the second controller 80, or may be executed through manipulation by an operator. The execution is similar to the execution in step S14 in Fig. 3 through autonomous driving or through manipulation by the operator for the movement (e.g., traveling) of the first mover 10 illustrated in Fig. 1.

In the preceding example, the first controller 30 has the "first mover 10 movement condition" being a condition to start the movement of the first mover 10 in step S14 (see Fig. 3). Similarly, in step S322, the second controller 80 may have a condition to start a movement or traveling of the second mover 60 (a second mover 60 movement condition, e.g., a second mover 60 traveling condition). For instance, the second mover 60 movement condition may include a condition of nonreceipt of the request information A (specifically, connection request information A1) by the second controller 80. Specifically, the second mover 60 movement condition includes a condition of continuous nonreceipt of the request information A by the second mover 60 from the first mover 10 for a predetermined time period (a second mover 60 movement start time threshold) in an available state for receiving the request information A from the first mover 10.

In the case where the movement of the second mover 60 in step S322 is executed through manipulation by the operator, a second relative position notification section 73a (see Fig. 2) may give a notification in the same manner as the first notification part 23.

For instance, a preferable traveling direction and a preferable position of the second mover 60 after the traveling or the movement in step S322 will be described below. In a case where only one first mover 10 is present on a worksite where the second mover 60 works, for example, the second mover 60 preferably travels in a direction toward the first mover 10. In a case where a plurality of first movers 10 is present on the worksite, the second mover 60 preferably moves to a position suitably for receiving request information A from a larger number of the first movers 10. In the case of the plurality of first movers 10 on the worksite, for example, the second mover 60 preferably moves to a position among a larger number of the first movers 10 to be located between or among the first movers 10, or surrounded by the first movers 10. In a case where two first movers 10 are present, for example, the second mover 60 preferably moves to a middle point on a line connecting the two first movers 10 to each other or to a position around the middle point. In a case where three or more first movers 10 are present, for example, the second mover 60 preferably moves to a center position of a triangular shape formed by lines connecting the first movers 10 to one another in a top view.

The second controller 80 redetermines whether the request information A is received (a request information A receipt redetermination step), that is, connection request information A1 is received (a connection request information A1 receipt redetermination step), in step S21 after the second mover 60 moves or travels in step S322.

Fourth modified embodiment showing an example of slewing of a second upper slewing body 63

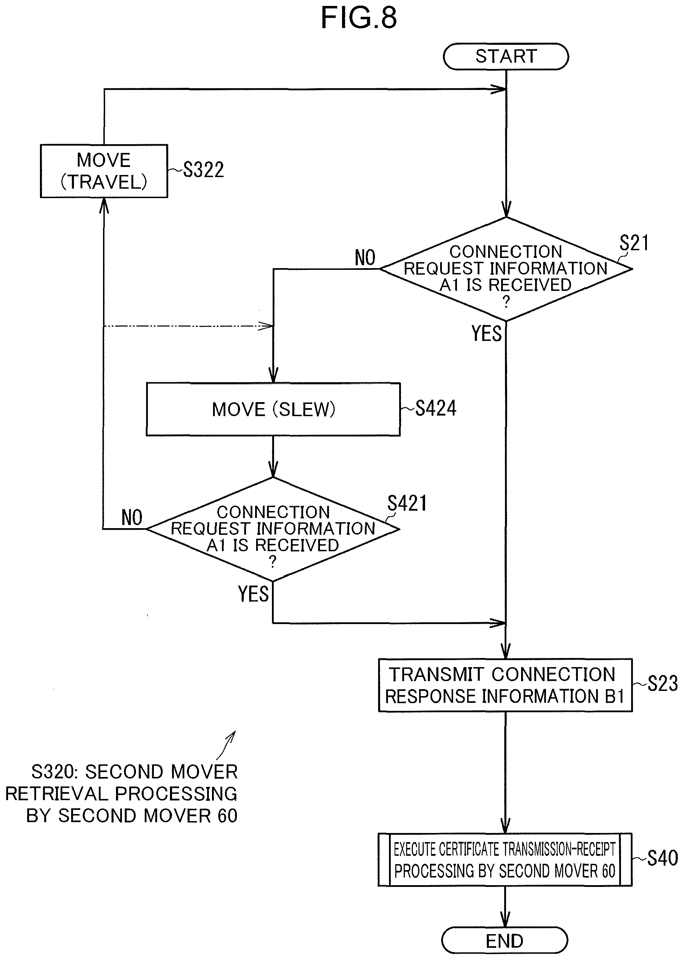

Described in the third modified embodiment is the example in which the second mover 60 illustrated in Fig. 1 travels as a movement of the second mover 60 in the case where the second mover 60 does not receive the request information A (NO in step S21 in Fig. 7). By contrast, in the case of "NO" in step S21, the second upper slewing body 63 may slew (step S424 in Fig. 8, a second upper slewing body 63 slewing step). Hereinafter, differences of second mover retrieval processing S320 by a second mover 60 in Fig. 8 from the second mover retrieval processing S220 by the second mover 60 in Fig. 7 will be described. Besides, steps S21, S23, S322, S421, and S424 in the second mover retrieval processing S320 by the second mover 60 as shown in Fig. 8 will be described with reference to Fig. 8.

In step S424, in the case where the second mover 60 illustrated in Fig. 1 does not receive request information A (NO in step S21), the second upper slewing body 63 slews (a second upper slewing body 63 slewing step). The reason why the second upper slewing body 63 slews in the case of "NO" in step S21 is similar to the reason why step S114 shown in Fig. 6 is executed, that is, similar to the reason why the first upper slewing body 13 slews in the case of no response from the second mover 60.

A second controller 80 shown in Fig. 1 may have a condition to start slewing of the second upper slewing body 63 (a second upper slewing body 63 slewing condition which is an example of a second mover 60 movement condition) in the same manner that the second mover 60 has the traveling condition as described above.

The slewing of the second upper slewing body 63 in step S424 may be executed through autonomous driving by the second controller 80, or may be executed through manipulation by an operator in the same manner as the traveling of the second mover 60 in step S322 (see Fig. 7).

In step S424, the second upper slewing body 63 may slew one time or a plurality of times in the same manner as the first upper slewing body 13 in step S114 (see Fig 6).

The second controller 80 redetermines whether request information A is received (a request information A receipt redetermination step), that is, connection request information A1 is received (a connection request information A1 receipt redetermination step), in step S421, after the second upper slewing body 63 slews in step S424.

When the second controller 80 (a request information receiving section 87a, see Fig. 2) receives the request information A (YES in step S421), a response information transmission section 87b (see Fig. 2) transmits connection response information B1 to a first mover 10 (step S23). Subsequently, the process proceeds to the certificate transmission-receipt processing S40 by the second mover 60.

In a case where the second controller 80 (the request information receiving section 87a, see Fig. 2) does not receive the request information A (NO in step S421), the second controller 80 executes, for example, as follows. In this case, the second controller 80 may make the second upper slewing body 63 slew again, that is, may return to step S424, or may make the second mover 60 travel, that is, may proceed to step S322.

Fifth modified embodiment showing an example of a movement of a second attachment 65

Described in the preceding examples are the configuration in which the second mover 60 (see Fig. 1) travels (step S322 in Fig. 7) and the configuration in which the second upper slewing body 63 (see Fig. 1) slews (step S424 in Fig. 8) in the case of "NO" in step S21 in Fig. 7 and Fig. 8. By contrast, in the case of "NO" in step S21, the second attachment 65 (see Fig. 1) may act or move (a second attachment 65 movement step). The reason why the second attachment 65 moves in the case of "NO" in step S21 is similar to the reason why the first attachment 15 moves in the second modified embodiment. A specific example of a process by a second controller 80 (see Fig. 1) for the movement of the second attachment 65 (see Fig. 1) in the case of "NO" in step S21 is similar to the specific example of the process by the first mover 10 for the traveling or slewing in the case of "NO" in step S13 in Fig. 3 and Fig. 6.

Hereinafter, a configuration excluding the authentication system 1 according to each embodiment of the present invention as shown in Fig. 1 in relation to a mover will be discussed. Non-authentication of the specific information A2a leads to non-verification of the validity of the specific information A2a. This may result in turning an attacker into an impostor. Further, a physically or theoretically long-distance communication in transmission and receipt of specific information A2a for authentication of the specific information A2a may induce attack to the specific information A2a in a communication line. Authentication or certification of the specific information A2a or the public key by an already existing certification authority may require a long time and costing a lot to get authenticated or certified.

By contrast, in the authentication system 1 according to each embodiment of the present invention, the second mover 60 has the function of authentication of the specific information A2a which the first mover 10 utilizes. When the specific information A2a includes the public key, the second mover 60 can authenticate the specific information A2a of the first mover 10 without using such an already existing certification authority. The configuration achieves the authentication of the specific information A2a more rapidly at a lower cost than the configuration in which the already existing certification authority authenticates or certifies the specific information A2a or the public key.

The authentication system 1 enables the second mover 60 to authenticate the specific information A2a of the first mover 10 located in the vicinity of the second mover 60, and thus, attains lowered necessity of long-distance communication for authentication of the specific information A2a.

In the authentication system 1, at least one of the first mover 10 and the second mover 60 may mechanically act (e.g., move or slew). This configuration enables retrieval of such states (e.g., relative positions at a distance or in a direction) of the first mover 10 and the second mover 60 as to give a more preferable radio wave environment for communication between the first mover 10 and the second mover 60. This results in achieving ensured authentication of the specific information A2a.

### First advantageous effect

The authentication system 1 illustrated in Fig. 1 provides the following advantageous effect.

The authentication system 1 includes the first mover 10 that is configured to travel and the second mover 60. The second mover 60 is configured to travel and independent of the first mover 10.

The first mover 10 includes the request information transmission section 37a (see Fig. 2). The request information transmission section 37a transmits request information A to the second mover 60 through wireless communication. The request information A indicates a request for a signature B2a to be affixed on specific information A2a. As shown in Fig. 2, the second mover 60 includes the signing part 84 and the response information transmission section 87b. The signing part 84 affixes the signature B2a (see Fig. 1) onto the specific information A2a (see Fig. 1) when the request information A is received from the first mover 10. The response information transmission section 87b is configured to transmit a certificate B2 (see Fig. 1) including the specific information A2a affixed with the signature B2a to the first mover 10 through wireless communication.

As illustrated in Fig. 1, the configuration enables the second mover 60 to affix the signature B2a onto the specific information A2a of the first mover 10 and transmit the specific information A2a affixed with the signature B2a (corresponding to the certificate B2) to the first mover 10. In other words, the second mover 60 can authenticate the specific information A2a of the first mover 10. The first mover 10 and the second mover 60 are wirelessly communicable. In this configuration, the first mover 10 and the second mover 60 are configured to travel. At least one of the first mover 10 and the second mover 60 travels to change the relative positions (at a distance or in a direction) of the first mover 10 and the second mover 60 and then to give a more preferable radio wave environment for wireless communication. The change results in increasing the possibility of establishment of wireless communication between the first mover 10 and the second mover 60. This configuration increases the possibility of transmission and receipt of information for authentication of the specific information A2a between the first mover 10 and the second mover 60. This consequently achieves facilitated authentication of the specific information A2a which the mover or the first mover 10 utilizes.

### Second advantageous effect

As shown in Fig. 2, the second mover 60 includes the second storage part 85 that stores information about the signature B2a (see Fig. 1). The signing part 84 and the second storage part 85 are disposed in the tamper resistance region 80a having tamper resistance.

The configuration attains a reduction in attack to the information about the signature B2a (see Fig. 1) and a reduction in attack to the signing part 84.

### Third advantageous effect

In a case where the first mover 10 receives no response to the transmitted request information A from the second mover 60, the first mover 10 is configured to operate as follows. In this case, the first mover 10 retransmits the request information A (step S11 in Fig. 3) shown in Fig. 1 to the second mover 60 after at least a portion of the first mover 10 moves (step S14 in Fig. 3).

In this configuration, the movement of at least a portion of the first mover 10 may increase the likelihood that the first mover 10 illustrated in Fig. 1 even in a state of failing to receive a response from the second mover 60 changes to a state that the first mover 10 succeeds in receiving the response from the second mover 60.

### Fourth advantageous effect

In the case where the first mover 10 receives no response to the transmitted request information A from the second mover 60, the first mover 10 is configured to retransmit the request information A shown in Fig. 1 to the second mover 60 (step S11 in Fig. 3) after traveling (step S14 in Fig. 3).

In this configuration, the traveling of the first mover 10 illustrated in Fig. 1 may increase the likelihood that the first mover 10 even in a state of failing to receive a response from the second mover 60 changes to a state that the first mover 10 succeed in receiving the response from the second mover 60.

### Fifth advantageous effect

The first mover 10 includes the first lower traveling body 11 that allows the first mover 10 to travel and the first upper slewing body 13 that is slewably attached to the first lower traveling body 11.

In the case where the first mover 10 receives no response to the transmitted request information A from the second mover 60, the first mover 10 is configured to operate as follows. In this case, the first mover 10 is configured to retransmit the request information A (step S111 in Fig. 6) shown in Fig. 1 to the second mover 60 after the first upper slewing body 13 slews with respect to the first lower traveling body 11 (step S114 in Fig. 6).

In this configuration, the slewing of the first upper slewing body 13 may increase the likelihood that the first mover 10 illustrated in Fig. 1 even in a state of failing to receive a response from the second mover 60 changes to a state that the first mover 10 succeeds in receiving the response from the second mover 60.

### Sixth advantageous effect

The second mover 60 is configured to move at least a portion of the second mover 60 (step S322 in Fig. 7) when the second mover 60 movement condition is satisfied. The second mover 60 movement condition includes a condition of nonreceipt of the request information A from the first mover 10.

In this configuration, the movement of at least a portion of the second mover 60 illustrated in Fig. 1 may increase the likelihood that the second mover 60 even in a state of failing to receive the request information A from the first mover 10 changes to a state that the second mover 60 succeeds in receiving the request information A from the first mover 10.

### Seventh advantageous effect

The second mover 60 is configured to travel (step S322 in Fig. 7) when the second mover 60 traveling condition is satisfied. The second mover 60 traveling condition includes a condition of nonreceipt of the request information A from the first mover 10.

In this configuration, the traveling of the second mover 60 illustrated in Fig. 1 may increase the likelihood that the second mover 60 even in a state of failing to receive the request information A from the first mover 10 changes to a state that the second mover 60 succeeds in receiving the request information A from the first mover 10.

### Eighth advantageous effect

The second mover 60 includes the second lower traveling body 61 that allows the second mover 60 to travel and the second upper slewing body 63 that is slewably attached to the second lower traveling body 61.

The second mover 60 is configured to slew (step S424 in Fig. 8) the second upper slewing body 63 with respect to the second lower traveling body 61 when the second mover 60 slewing condition is satisfied. The second mover 60 slewing condition includes a condition of nonreceipt of the request information A from the first mover 10.

In this configuration, the slewing of the second upper slewing body 63 may increase the likelihood that the second mover 60 illustrated in Fig. 1 even in a state of failing to receive the request information A from the first mover 10 changes to a state that the second upper slewing body 63 succeeds in receiving the request information A from the first mover 10.

### Ninth advantageous effect

The authentication system 1 includes the relative position notification section, i.e., at least one of the first relative position notification section 23a and the second relative position notification section 73a. The relative position notification section gives a notification of information about relative positions of the first mover 10 and the second mover 60 (see Fig. 5).

This configuration allows an operator having received the notification from the relative position notification section to grasp a specific way of moving the first mover 10 or the second mover 60.

### Tenth advantageous effect

The authentication system 1 includes a mover that is available as the second mover 60. The "mover" is switchable between a mode of serving as the second mover 60 and exerting the function of the signing part 84 shown in Fig. 2 and a mode of not serving as the second mover 60 without exerting the function of the signing part 84.

This configuration enables the mover to be switchable between an ON-mode and an Off-mode of the function of the signing part 84 (the function of authentication of the specific information A2a, see Fig. 1). This results in, for example, allowing a plurality of movers to mutually authenticate their specific information A2a.

### Eleventh advantageous effect.

Each of the first mover 10 and the second mover 60 is a working machine.

This configuration provides the same advantageous effect as the "First advantageous effect" described above owing to the two working machines, i.e., the first mover 10 and the second mover 60.

### Twelfth advantageous effect

An authentication method in the embodiment provides the following advantageous effect.

The authentication method is for the first mover 10 that is configured to travel and the second mover 60 that is configured to travel and independent of the first mover 10, the movers being illustrated in Fig. 1. The authentication method includes a request information transmission step (step S11 in Fig. 3), a signing step (step S42 in Fig. 4), and a response information transmission step (step S43 in Fig. 4). The request information transmission step (step S11 in Fig. 3) makes the first mover 10 illustrated in Fig. 1 transmit, to the second mover 60 through wireless communication, request information A indicating a request for a signature B2a to be affixed on specific information A2a. The signing step (step S42 in Fig. 4) makes the second mover 60 illustrated in Fig. 1 affix the signature B2a onto the specific information A2a when the request information A is received from the first mover 10. The response information transmission step (step S42 in Fig. 4) makes the second mover 60 illustrated in Fig. 1 transmit, to the first mover 10 through wireless communication, a certificate B2 including specific information A2a affixed with the signature B2a.

The method provides the same advantageous effect as the "First advantageous effect" described above.

### Thirteenth advantageous effect

In a case where the first mover 10 receives no response to the transmitted request information A from the second mover 60, the first mover 10 operates as follows. In this case, the first mover 10 retransmits the request information A (step S11 in Fig. 3) shown in Fig. 1 to the second mover 60 after at least a portion of the first mover 10 moves (step S14 in Fig. 3).

The method provides the same advantageous effect as the "Third advantageous effect" described above.

### Fourteenth advantageous effect

The second mover 60 moves at least a portion of the second mover 60 (step S322 in Fig. 7) when the second mover 60 movement condition is satisfied. The second mover 60 movement condition includes a condition of nonreceipt of the request information A from the first mover 10.

The method provides the same advantageous effect as the "Sixth advantageous effect" described above.

### Fifteenth advantageous effect

An authentication program provides the following advantageous effect. The authentication program causes each computer (the first controller 30, the second controller 80) to execute the following process. The computer (the first controller 30, the second controller 80) executes the authentication program for authentication between the first mover 10 that is configured to travel and the second mover 60 that is configured to travel and independent of the first mover 10, the movers being illustrated in Fig. 1. The authentication program causes the computer (the first controller 30, the second controller 80) to execute a request information transmission step (step S11 in Fig. 3), a signing step (step S42 in Fig. 4), and a response information transmission step (step S43 in Fig. 4). The request information transmission step (step S11 in Fig. 3) makes the first mover 10 illustrated in Fig. 1 transmit, to the second mover 60 through wireless communication, request information A indicating a request for a signature B2a to be affixed on specific information A2a. The signing step (step S42 in Fig. 4) makes the second mover 60 illustrated in Fig. 1 affix the signature B2a onto the specific information A2a when the request information A is received from the first mover 10. The response information transmission step (step S42 in Fig. 4) makes the second mover 60 illustrated in Fig. 1 transmit, to the first mover 10 through wireless communication, a certificate B2 including the specific information A2a affixed with the signature B2a.

The configuration provides the same advantageous effect as the "First advantageous effect" described above.

### Modified embodiments

Each embodiment described above may be modified in various ways. For example, the number of constituent elements in the embodiments may be changed, and one or more of the constituent elements are excludable. For instance, the embodiments may be combined with each other in various ways. The constituent elements may be, for example, fixed to or connected to each other in a direct way or an indirect way. For instance, the connection between or among the structural elements shown in Fig. 2 and other drawings may be changed. The constituent elements are described as members different from one another or a part of the structure, but may, for example, cover a single member or a part of a specific member. For instance, the constituent element described as a single member or a part of a specific member may cover a plurality of members or parts different from one another. For instance, the parameters, such as thresholds, may be preset for the first controller 30 and the second controller 80 through manipulation by an operator. The parameters may not be changed, may be changed, for example, through manipulation, or may be automatically changed by the first controller 30 and the second controller 80 under a certain condition. For example, the order of steps in each of the flowcharts in Fig. 3, Fig. 4, and Fig. 6 to Fig. 8 may be changed, a part of the steps may not be executed, and steps in the different flowcharts may be combined in any manner. Each constituent element may have, for example, only a part of features, such as operative function, an arrangement, a shape, and movement or operation.

The present invention provides an authentication system. The authentication system includes a first mover that is configured to travel and a second mover that is configured to travel and independent of the first mover. The first mover includes a request information transmission section that transmits, to the second mover through wireless communication, request information indicating a request for a signature to be affixed on specific information. The second mover includes: a signing part that affixes the signature onto the specific information when the second mover receives the request information from the first mover; and a response information transmission section that is configured to transmit a certificate including the specific information affixed with the signature to the first mover through wireless communication.

In the configuration, the second mover may include a storage part that stores information about the signature, and the signing part and the storage part may be disposed in a tamper resistance region having tamper resistance.

In the configuration, in a case where the first mover receives no response to the transmitted request information from the second mover, the first mover may retransmit the request information to the second mover after at least a portion of the first mover moves.

In the configuration, in the case where the first mover receives no response to the transmitted request information from the second mover, the first mover may retransmit the request information to the second mover after traveling on a traveling surface.

In the configuration, the first mover may include: a first lower traveling body that is configured to travel on a traveling surface; and a first upper slewing body slewably attached to the first lower traveling body. In the case where the first mover receives no response to the transmitted request information from the second mover, the first mover may retransmit the request information to the second mover after the first upper slewing body slews with respect to the first lower traveling body.

In the configuration, at least a portion of the second mover may move when a second mover movement condition including a condition of nonreceipt of the request information from the first mover is satisfied.

In the configuration, the second mover may travel on a traveling surface when the second mover movement condition including the condition of nonreceipt of the request information from the first mover is satisfied.

In the configuration, the second mover may include: a second lower traveling body that is configured to travel on a traveling surface; and a second upper slewing body slewably attached to the second lower traveling body. The second upper slewing body may slew with respect to the second lower traveling body when a second mover slewing condition including a condition of nonreceipt of the request information from the first mover is satisfied.

The configuration may further include a relative position notification section that gives a notification of information about relative positions of the first mover and the second mover.

The configuration may further include a mover that is available as the second mover. The mover may be switchable between a mode of serving as the second mover to exert a function of the signing part, and a mode of not serving as the second mover without exerting the function of the signing part.

In the configuration, each of the first mover and the second mover may be a working machine.

The present invention further provides an authentication method. The authentication method is for a first mover that is configured to travel and a second mover that is configured to travel and independent of the first mover. The authentication method includes: a request information transmission step of making the first mover transmit, to the second mover through wireless communication, request information indicating a request for a signature to be affixed on specific information; a signing step of making the second mover affixes the signature onto the specific information when the second mover receives the request information from the first mover; and a response information transmission step of making the second mover transmit a certificate including the specific information affixed with the signature to the first mover through wireless communication.

In the method, in a case where the first mover receives no response to the transmitted request information from the second mover, the first mover may retransmit the request information to the second mover after at least a portion of the first mover moves.

In the method, at least a portion of the second mover may move when a second mover movement condition including a condition of nonreceipt of the request information from the first mover is satisfied.

The present invention further provides an authentication program. The authentication program is to be executed by a computer for authentication between a first mover that is configured to travel and a second mover that is configured to travel and independent of the first mover. The authentication program includes causing the computer to execute: a request information transmission step of making the first mover transmit, to the second mover through wireless communication, request information indicating a request for a signature to be affixed on specific information; a signing step of making the second mover affixes the signature onto the specific information when the second mover receives the request information from the first mover; and a response information transmission step of making the second mover transmit a certificate including the specific information affixed with the signature to the first mover through wireless communication.

## Claims

1. An authentication system, comprising:
a first mover that is configured to travel; and
a second mover that is configured to travel and independent of the first mover, wherein
the first mover includes a request information transmission section that transmits, to the second mover through wireless communication, request information indicating a request for a signature to be affixed on specific information, and
the second mover includes:
a signing part that affixes the signature onto the specific information when the second mover receives the request information from the first mover; and
a response information transmission section that is configured to transmit a certificate including the specific information affixed with the signature to the first mover through wireless communication.

2. The authentication system according to claim 1, wherein the second mover includes a storage part that stores information about the signature, and
the signing part and the storage part are disposed in a tamper resistance region having tamper resistance.

3. The authentication system according to claim 1 or 2, wherein,
in a case where the first mover receives no response to the transmitted request information from the second mover, the first mover retransmits the request information to the second mover after at least a portion of the first mover moves.

4. The authentication system according to claim 3, wherein,
in the case where the first mover receives no response to the transmitted request information from the second mover, the first mover retransmits the request information to the second mover after traveling on a traveling surface.

5. The authentication system according to claim 3 or 4, wherein the first mover includes:
a first lower traveling body that is configured to travel on a traveling surface; and
a first upper slewing body slewably attached to the first lower traveling body, and,
in the case where the first mover receives no response to the transmitted request information from the second mover, the first mover retransmits the request information to the second mover after the first upper slewing body slews with respect to the first lower traveling body.

6. The authentication system according to any one of claims 1 to 5, wherein at least a portion of the second mover moves when a second mover movement condition including a condition of nonreceipt of the request information from the first mover is satisfied.

7. The authentication system according to claim 6, wherein the second mover travels on a traveling surface when the second mover movement condition including the condition of nonreceipt of the request information from the first mover is satisfied.

8. The authentication system according to claim 6 or 7, wherein the second mover includes:
a second lower traveling body that is configured to travel on a traveling surface; and
a second upper slewing body slewably attached to the second lower traveling body, and
the second upper slewing body slews with respect to the second lower traveling body when a second mover slewing condition including a condition of nonreceipt of the request information from the first mover is satisfied.

9. The authentication system according to any one of claims 1 to 8, further comprising a relative position notification section that gives a notification of information about relative positions of the first mover and the second mover.

10. The authentication system according to any one of claims 1 to 9, comprising a mover that is available as the second mover, wherein
the mover is switchable between a mode of serving as the second mover to exert a function of the signing part, and a mode of not serving as the second mover without exerting the function of the signing part.

11. The authentication system according to any one of claims 1 to 10, wherein each of the first mover and the second mover is a working machine.

12. An authentication method for a first mover that is configured to travel and a second mover that is configured to travel and independent of the first mover, the authentication method comprising:
a request information transmission step of making the first mover transmit, to the second mover through wireless communication, request information indicating a request for a signature to be affixed on specific information;
a signing step of making the second mover affix the signature onto the specific information when the second mover receives the request information from the first mover; and
a response information transmission step of making the second mover transmit a certificate including the specific information affixed with the signature to the first mover through wireless communication.

13. The authentication method according to claim 12, wherein,
in a case where the first mover receives no response to the transmitted request information from the second mover, the first mover retransmits the request information to the second mover after at least a portion of the first mover moves.

14. The authentication method according to claim 12 or 13, wherein at least a portion of the second mover moves when a second mover movement condition including a condition of nonreceipt of the request information from the first mover is satisfied.

15. An authentication program to be executed by a computer for authentication between a first mover that is configured to travel and a second mover that is configured to travel and independent of the first mover, the authentication program comprising:
causing the computer to execute:
a request information transmission step of making the first mover transmit, to the second mover through wireless communication, request information indicating a request for a signature to be affixed on specific information;
a signing step of making the second mover affix the signature onto the specific information when the second mover receives the request information from the first mover; and
a response information transmission step of making the second mover transmit a certificate including the specific information affixed with the signature to the first mover through wireless communication.
